# FASCICULE DE BREVET EUROPEEN

(11) **EP 2 663 421 B1**
(45) Date de publication et mention de la délivrance du brevet: **06.06.2018**
(21) Numéro de dépôt: 12706071.3
(22) Date de dépôt: 11.01.2012
(51) Int. Cl.: B23K 37/053

(54) **PROCÉDÉ DE POSITIONNEMENT MUTUEL DE TUBES**
VERFAHREN ZUR POSITIONIERUNG VON ROHREN RELATIV ZUEINANDER
METHOD FOR POSITIONING TUBES WITH RESPECT TO ONE ANOTHER

(30) Priorité: 11.01.2011 FR 1150231
(43) Date de publication de la demande: 20.11.2013
(73) Titulaire: Serimax, 77290 Mitry-Mory (FR)
(72) Inventeur: DAGENAIS, Jean-François, F-13260 Cassis (FR)
(74) Mandataire: Renard, Alexis
(86) Numéro de dépôt international: PCT/FR2012/000022
(87) Numéro de publication internationale: WO 2012/095589

(56) Documents cités:
- EP-A1- 0 112 752
- WO-A1-2006/112689
- WO-A1-2010/046390
- US-A1- 2005 087 586

## Description

L'invention se rapporte au domaine du positionnement mutuel de tubes et, plus précisément, de tubes qu'il s'agit d'abouter, par exemple par soudage. D'une façon générale, on aligne d'abord les tubes l'un par rapport au niveau de leurs faces d'extrémités, puis on les maintient dans cette position pour les souder ensemble.

Divers procédés et dispositifs peuvent été utilisés à cette fin (voir le document EP-A-0 112 752). On connaît des brides comprenant un flasque annulaire portant des vérins à vis fixés de manière telle que leur tige respective dépasse du flasque, vers l'intérieur de celui-ci.

Le flasque annulaire est généralement fait de deux pièces en forme respective de demi-anneaux. Les pièces sont articulées l'une sur l'autre par une charnière. Elles peuvent être écartées l'une de l'autre afin de placer le flasque autour d'un tube et de l'en retirer. Les pièces du flasque peuvent être rapprochées les unes des autres jusqu'à une position fermée du flasque. Les pièces peuvent être verrouillées dans cette position et maintenir ainsi le flasque sur le tube. Les vérins peuvent être commandés de manière à déformer le tube et/ou déplacer ce dernier par rapport au flasque. La bride permet de positionner le tube qu'elle supporte par rapport à un autre tube pour aligner ces tubes au mieux. Le terme "aligner" est à prendre ici dans un sens large : il s'agit de mettre les tubes dans une position mutuelle la plus adaptée à leur aboutage par soudage, en tenant compte de leurs variations de forme et de dimensions, sans nécessairement chercher à les disposer sur une même ligne. Ce positionnement mutuel des tubes peut inclure l'adaptation mutuelle des profils extérieurs des tubes au voisinage de leurs extrémités à assembler par déformation de l'un et ou l'autre des tubes.

Le vissage des vérins permet d'exercer des pressions ponctuelles sur la surface extérieure du tube engagé dans la bride, en autant de zones que de vérins sur le flasque. Ceci permet de déformer le tube, par exemple pour en améliorer la circularité ou pour faire coïncider son profil extérieur au profil extérieur d'un tube homologue.

Il arrive que l'on positionne une bride respective sur chacun des tubes à abouter pour avoir une plus grande liberté de positionnement. Une meilleure correspondance des surfaces ou arêtes d'extrémité peut être obtenue en déformant successivement et respectivement les extrémités de chaque tube. Ainsi un meilleur soudage peut être réalisé.

Les brides permettent également de serrer et de maintenir en position de soudage l'un et/ou l'autre des tubes.

On connaît également par le document WO 01/34340, un procédé de positionnement mutuel de tubes dans lequel les tubes sont extérieurement en prise chacun avec un ensemble de serrage respectif, les ensembles de serrage étant montés sur un cadre rigide commun. Les extrémités des tubes ayant été soudées entre elles, le cadre est déplacé par rapport à la surface extérieure de l'un des tubes en direction de l'extrémité de ce tube opposée, là où une nouvelle soudure doit être réalisée.

Seuls la forme générale et le diamètre extérieur de l'un des tubes sont pris en compte pour ajuster le positionnement et le serrage de l'autre tube. Ce procédé ne permet qu'un serrage et un positionnement mutuel grossier des tubes.

En matière de soudage de tubes, il est important d'avoir une excellente coïncidence de forme entre les extrémités de chaque tube et de les positionner en vis-à-vis ou le plus possible au contact l'une de l'autre.

Les tolérances de fabrication font que les contours intérieurs et extérieurs des tubes ne sont pas nécessairement concentriques. Or la plupart des procédés connus cherchent à faire coïncider les contours extérieurs des tubes à souder.

La surface intérieure d'un tube présente également des imperfections géométriques et dimensionnelles. Afin de rendre aptes au soudage les extrémités des tubes à abouter, les faces d'extrémité des tubes peuvent être préalablement usinées. Cet usinage peut comprendre une opération de dressage d'une face d'extrémité, la réalisation d'un chanfrein dit intérieur, reliant la face d'extrémité à la paroi intérieur du tube, et/ou la réalisation d'un chanfrein dit extérieur, reliant la face d'extrémité à la surface extérieure du tube.

Généralement, cette opération d'usinage s'effectue à l'aide d'un outil copieur du profil intérieur du tube au voisinage de son extrémité. Ainsi les chanfreins intérieurs et/ou extérieurs réalisés en extrémité d'un tube suivent le profil intérieur du tube en question mais en reproduisent également les imperfections, en particulier les imperfections liées aux variations de tolérances.

Mettre en position les tubes en cherchant à aligner leurs surfaces intérieures s'avère aussi imparfait. Il en résulte des soudures comportant des défauts, notamment pour les tubes ayant des extrémités chanfreinées, avec talons.

Un tube à extrémité chanfreinée présente le plus souvent une face d'extrémité comportant une surface généralement tronconique - le chanfrein proprement dit - reliant la surface extérieure du tube à une surface généralement annulaire, de section sensiblement droite ou concave, proche de la surface intérieure du tube. Cette surface annulaire, qui correspond à la surface d'extrémité, peut être désignée par le terme de "talon" dans la technique.

La face d'extrémité d'un tube à extrémité chanfreinée peut être dépourvue de surface annulaire : la surface généralement tronconique se rattache alors également à la surface intérieure du tube. Dit autrement, l'extrémité du tube se réduit dans ce cas à une arête à l'intersection de la surface intérieure du tube et du chanfrein.

Les arêtes ou surfaces d'extrémité respectives des tubes sont destinées à former un fond, ou racine, pour le cordon de soudure, tandis que les chanfreins délimitent une zone que l'on doit remplir pour former le cordon.

Un positionnement correct des tubes devrait chercher à faire coïncider les talons, ou bien les arêtes. À cause des défauts de forme et de dimensions liés à la fabrication des tubes, les procédés connus ne le permettent pas.

Il est connu de disposer des brides à l'intérieur des tubes à abouter pour obtenir un alignement en deux cercles concentriques des extrémités des vérins une fois ceux-ci déployés et mis en contacts ponctuels avec la surface des tubes à abouter au voisinage de leurs extrémités respectives.

Lorsque les vérins d'une bride se déploient, leurs tiges se déplacent toutes de la même distance et les extrémités de ces tiges s'inscrivent dans un cercle quasi parfait aux tolérances de réalisation de la bride.

Un tel procédé ne permet donc pas de garantir une coïncidence de forme des extrémités des deux tubes à assembler sur toute leur périphérie.

L'invention vise à améliorer la situation, et en particulier à positionner deux tubes en vis-à-vis de telle sorte que leurs talons ou leurs arêtes d'extrémité présentent une plus grande surface de coïncidence.

On propose un procédé de positionnement mutuel de tubes selon la revendication 1. Le procédé proposé permet d'affiner l'adéquation entre les surfaces ou géométries de contact des tubes à souder, au niveau de leur plan de joint. Le procédé permet d'améliorer la coïncidence des surfaces d'extrémité des tubes. Ceci assure une meilleure prise de la première passe de soudure.

La surface d'extrémité peut présenter une forme sensiblement annulaire, avec une certaine épaisseur. Cette surface d'extrémité est parfois désignée "talon" dans la technique.

Des caractéristiques additionnelles, complémentaires, de remplacement sont énoncées ci-après :
- Le décalage radial H, H' est apprécié visuellement.
- Le décalage radial H, H' est évalué à l'aide de capteurs spécifiques, et des valeurs de décalage radial sont transmises à une unité centrale de calcul, cette unité centrale de calcul étant capable de traité lesdites valeurs pour commander le déplacement de tout ou partie desdits vérins.
- À l'étape d'évaluation du décalage radial, on évalue celui-ci sous la forme d'une ou plusieurs valeurs de décalage radial entre des arêtes respectives du premier et du second tube, chaque arête formant jonction entre la surface intérieure de son tube respectif et la surface d'extrémité de ce tube.
- À l'étape d'évaluation du décalage radial, on évalue celui-ci sous la forme d'une ou plusieurs valeurs de décalage radial entre des arêtes respectives du premier et du second tube, chaque arête formant jonction entre la surface de chanfrein de son tube respectif et la surface d'extrémité de ce tube.
- À l'étape d'évaluation du décalage radial, on évalue celui-ci sous la forme d'une ou plusieurs valeurs de décalage radial entre des arêtes respectives du premier et du second tube, chaque arête formant jonction entre la surface de chanfrein, de son tube respectif, et la surface intérieure de ce tube.
- L'étape de mise en prise comprend les opérations de mettre en prise un premier jeu de vérins de serrage sur la surface extérieure du premier tube, déplacer le second tube par rapport au premier tube dans une position d'alignement où la face d'extrémité du second tube est approximativement alignée avec la face d'extrémité du premier tube, mettre en prise un second jeu de vérins de serrage sur la surface extérieure du second tube dans cette position d'alignement.
- On pilote les vérins du premier et/ou du second jeu de manière à diminuer globalement le décalage radial entre les surfaces d'extrémité ou les arêtes d'extrémité tout cherchant à respecter une valeur de décalage radial maximale sur ces surfaces d'extrémité ou le long des arêtes d'extrémités.
- À l'état pré positionné, les surfaces extérieures du premier et du deuxième tube sont mutuellement écartées de quelques millimètres selon la direction longitudinale de l'un et/ou l'autre de ces tubes.
- On pilote les vérins de serrage individuellement de façon à permettre un déplacement relatif des extrémités des tubes tout en maintenant des efforts de prise desdits vérins sur lesdits tubes.
- On déplace ledit premier et/ou le deuxième tube relativement l'un à l'autre jusqu'à l'obtention d'une surface de coïncidence comprise entre 20 % et 100 % de la surface d'extrémité, du premier et/ou du deuxième tube.
- Les vérins restent bloqués dans une position de prise et maintiennent les efforts appliqués au premier tube et/ou au deuxième tube lorsque la position de coïncidence optimale est obtenue.
- L'étape de pilotage des vérins comprend au moins une sous-étape dans laquelle on pilote le déplacement de l'un au moins des vérins indépendamment du déplacement des autres vérins de manière à modifier localement le décalage radial H, H' entre les surfaces d'extrémité ou les arêtes d'extrémité.
- L'étape de pilotage des vérins comprend les sous-étapes de piloter conjointement les vérins pour déplacer le premier tube et le second tube l'un par rapport à l'autre en réduisant globalement le décalage radial entre les surfaces d'extrémités ou les arêtes d'extrémité de ces tubes, et de piloter individuellement au moins l'un des vérins de manière différentielle par rapport à un ou plusieurs vérins antagonistes pour déformer localement son tube respectif et réduire un décalage radial particulier.
- On utilise une bride comprenant deux flasques homologues, montés l'un sur l'autre, l'un des flasques supportant une partie de ladite pluralité de vérins, tandis que l'autre flasque supporte la partie restante de ladite pluralité de vérins.

On propose également un dispositif pour le positionnement mutuel de tubes comprenant une bride comportant deux flasques homologues, montés l'un sur l'autre, l'un des flasques supportant un premier jeu de vérins hydrauliques, tandis que l'autre flasque supporte un second jeu de vérins hydrauliques, les vérins de l'un au moins du premier jeu de vérins et du second jeu de vérins étant chacun associés d'une part à une électrovanne qui peut être commandée pour alimenter en fluide le vérin et, d'autre part, à un régulateur de pression de type proportionnel qui peut être piloté pour commander le vérin à l'échappement.

Le dispositif peut comprendre en outre une centrale hydraulique comportant une pluralité d'unités de pompe hydraulique, chaque vérin de l'un au moins du premier et du second jeu de vérins étant relié à un élément de pompe respectif.

D'autres caractéristiques, détails et avantages de l'invention apparaîtront à la lecture de la description ci-après, faite en référence aux figures annexées, sur lesquelles :
- la figure 1 représente une vue en perspective simplifiée d'une bride de positionnement ;
- la figure 2A représente, en coupe longitudinale, deux portions d'extrémité de tubes dans une première configuration ;
- la figure 2B est analogue à la figure 2A, les portions présentant une seconde configuration ;
- la figure 2C est analogue à la figure 2A, les portions présentant une troisième configuration ;
- la figure 3A est analogue à la figure 2A, les portions présentant une quatrième configuration ;
- la figure 3B est analogue à la figure 2A, les portions présentant une cinquième configuration ;
- la figure 3C est analogue à la figure 2A, les portions présentant une sixième configuration ;
- la figure 4 est un ordinogramme illustrant un procédé de positionnement mutuel de tubes ;
- la figure 5 est un ordinogramme qui détaille une étape 100 de la figure 4 selon une première variante du procédé de positionnement;
- la figure 6 est un ordinogramme qui détaille l'étape 100 de la figure 4 selon une seconde variante du procédé de positionnement;
- les figures 7A, 7B et 7C montrent, en coupe longitudinale, des portions d'extrémité de deux tubes, en différentes étapes de leur positionnement mutuel.

Les dessins annexés comportent des éléments de caractère certain et pourront à ce titre non seulement servir à compléter l'invention, mais aussi contribuer à sa définition, le cas échéant.

Les éléments identiques ou similaires sont repérés par des signes de référence identiques sur l'ensemble des figures.

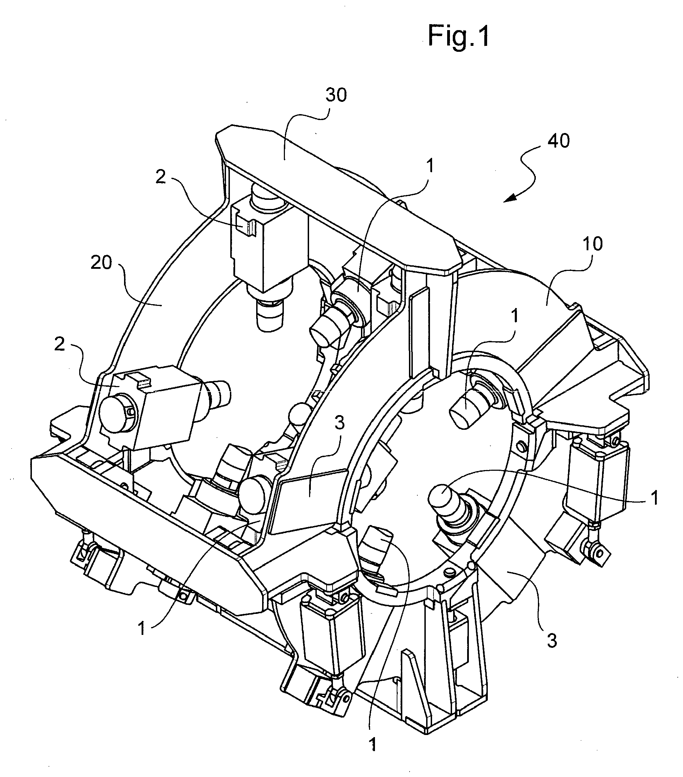

On fait référence à la figure 1.

On y voit un équipement d'aide au positionnement de tubes, sous la forme d'une bride 40.

Un premier ensemble de vérins 1, ici au nombre de cinq, est fixé sur un premier flasque, ou support, annulaire 10, tandis qu'un second ensemble de vérins 2, ici au nombre de cinq, est fixé sur un deuxième flasque annulaire 20. Le premier flasque 10 et le second flasque 20 sont disposés en regard l'un de l'autre, de manière sensiblement concentrique. Ils sont maintenus fixement dans cette position relative par des pièces de liaison, ou traverses 30. Chaque vérin du premier ensemble 1 se trouve en regard d'un vérin du second ensemble 2, ou vérin homologue, et réciproquement. Le premier ensemble de vérins 1 et le second ensemble de vérins 2 sont destinés à être disposés au droit, respectivement, d'un premier tube et d'un second tube à positionner l'un par rapport à l'autre, à proximité de leurs extrémités voisines. Dit autrement, les vérins du premier ensemble 1 sont destinés à être répartis autour du premier tube tandis que les vérins du second ensemble sont destinés à être répartis autour du second tube.

Des plaques de renfort 3 sont ici fixées sur le premier flasque 10 et/ou le second flasque 20, à chaque fois au droit des vérins du premier ensemble 1 et/ou du second ensemble 2. Cela permet de rigidifier les flasques. Le nombre, les dimensions, la constitution des plaques de renfort 3 peuvent varier en fonction du type d'efforts exercés sur la structure. Ici, les vérins 1, 2 sont de type hydraulique à double effet. Ils sont préférentiellement couplés à un flexible (non représenté) par un raccord tel qu'un raccord rapide.

Chaque vérin 1 présente un capteur de déplacement, ici interne (non visible), qui peut être relié à une unité centrale de commande et de traitement. Ces capteurs de course de précision peuvent être de type magnétostrictif, par exemple présentant une résolution de 0,05 mm et d'une précision de 0,1 mm. Ces capteurs peuvent transmettre des données correspondantes au calculateur. Ces données correspondent à des données de position de lieux de la surface de tubes par rapport à une position de référence où la tige de vérin est complètement rétractée.

Ces capteurs sont optionnels. Ils peuvent être remplacés par des capteurs de distance placés de manière à mesurer la distance entre le châssis et la surface extérieure du tube sur lequel le châssis est monté.

Des électrovannes coopèrent individuellement avec chaque vérin 1 de façon à fournir une pression ou un volume de fluide adapté et contrôlé. À chaque vérin est associée une électrovanne ici de type impulsionnelle. En variante, les électrovannes pourraient être de type proportionnelles.

Chaque vérin est ici associé à deux capteurs de pression, un capteur respectif pour chacune des chambres du vérin. Ceci permet de connaître l'effort de poussée sur la tige à partir de la mesure d'une différence de pression entre les deux chambres du vérin. Chaque vérin présente une ou plusieurs entrées et une ou plusieurs sorties non représentées, l'une au moins des entrées et l'une au moins des sorties étant reliée à une conduite flexible supportant une pression de 200 à 800 bars, par exemple par un connecteur rapide.

Cette conduite est elle-même reliée à une centrale d'alimentation hydraulique. Cette centrale d'alimentation comprend au moins une pompe à fluide. De préférence elle comprend une pompe par électrovanne, les pompes pouvant alors être montées sur un arbre d'entraînement commun. On peut utiliser des pompes à débit variable pour optimiser les temps de cycle. On peut utiliser une pompe commune pour le premier jeu de vérin 1 et le second jeu de vérin 2, la pompe pouvant être commutée pour alimenter l'un ou l'autre des jeux de vérins en question.

Chaque vérin est associé à un régulateur de pression de type proportionnel qui est piloté pour commander le vérin en question à l'échappement. Ce régulateur peut former un même composant avec l'un des deux capteurs de pression décrits plus haut.

Le nombre de vérins équipant les flasques peut varier en fonction des contraintes techniques, telles que, notamment, l'encombrement, les efforts mis en jeu, le coût, ou le diamètre du flasque en question.

Préférentiellement, en particulier pour des applications de soudage off-shore, on choisit des vérins hydrauliques renforcés, qui peuvent supporter sur leur tige un effort radial de l'ordre de 20 pour cent de leur capacité totale (effort longitudinal). Dans ce type d'application en effet, durant le soudage, les efforts de traction appliqués sur les tubes peuvent être considérables. Ils sont couramment de l'ordre de quelques dizaines de tonnes. Les mouvements relatifs des tubes peuvent également être importants. Le dispositif selon l'invention est opérationnel et fiable malgré ces conditions d'exploitation difficiles.

La tige de chaque vérin est équipée d'un patin à son extrémité.

Le patin de la tige des vérins de l'un au moins du premier jeu de vérins 1 et du second jeu de vérins 2 est monté à pivotement. Ce patin peut en outre être équipé de galets rotatifs, montés fous.

Un dispositif conforme à la bride de la figure 1 a été réalisé par la Demanderesse. Sur chaque flasque 10, 20, cinq vérins hydrauliques ont été fixés. Chaque vérin travaille sous une pression de 200 à 800 bars, présente une capacité de poussée, selon son axe longitudinal, de 1 à 50 tonnes, voire jusqu'à 200 tonnes, une capacité de traction, radialement à son axe longitudinal, de 1 à 10 tonnes, voire jusqu'à 50 tonnes, et une course de 30 à 100 millimètres. Chaque vérin comprend un capteur interne de déplacement qui présente une précision de 0,05 millimètres et une résolution de 0,05.

Le circuit d'alimentation de chaque chambre de vérin comporte un capteur de pression qui permet de connaître avec précision la force d'appui sur la sur la surface extérieure d'un tube. La précision en question peut être voisine de 1000 kPa avec une résolution proche de 500 kPa. Les capteurs sont reliés ensemble à une unité de traitement et de commande comprenant par exemple un microcalculateur ou automate programmable par exemple du type connu sous le nom de "Control Logix", de la société Allen Bradley. L'invention concerne un procédé de positionnement mutuel d'un premier tube et d'un second tube en vue de les assembler par soudage, en leurs faces d'extrémités.

Les vérins d'un premier jeu de vérins sont positionnés au voisinage de l'extrémité d'un premier tube, autour de ce tube. Il peut s'agir des vérins 1 de la bride 40.

Les vérins peuvent être fixés à un support commun, par exemple le flasque 10 de la figure 1. De préférence, ils sont régulièrement angulairement répartis autour du premier tube.

Les vérins d'un second jeu de vérins sont positionnés au voisinage d'une extrémité d'un second tube, à abouter par soudage au premier tube. Il peut s'agir des vérins 2 de la bride 40.

Les vérins du second jeu peuvent être fixés sur un support commun, par exemple le flasque 20 de la figure 1. Les vérins 2 sont préférentiellement régulièrement angulairement répartis autour de ladite extrémité du deuxième tube.

Les premiers vérins 1 et des seconds vérins 2 peuvent être reliés les uns aux autres, espacés les uns des autres selon la direction axiale des tubes à positionner; par des moyens de liaison de type arceaux, étriers ou équivalents sont prévus afin de ménager un volume par exemple pour le passage de moyens de soudage ou autres équipements adaptés. Ils peuvent être de longueur fixe ou ils peuvent être de longueur variable afin de régler l'écartement entre les extrémités des tubes à positionner. Les moyens peuvent être du type des traverses 4 de la figure 1

Les flasques 10, 20 peuvent être prévus en plusieurs parties afin de prendre une position de fermeture où ils forment un anneau continu autour des extrémités des tubes et une position d'ouverture où une ou plusieurs parties prennent une position écartée vis-à-vis de la position annulaire de fermeture. Des moyens tels que des charnières permettent alors la liaison pivot des parties mobiles vis-à-vis des parties fixes. Bien entendu un tel arrangement permet un engagement ou un dégagement des extrémités des tubes vis-à-vis de l'équipement, soit pour leur mise en place avant soudage, soit pour leur dégagement après soudage.

Le procédé peut utiliser le dispositif qui vient d'être décrit, dont chaque flasque est en deux parties ou plus, ou d'un seul tenant.

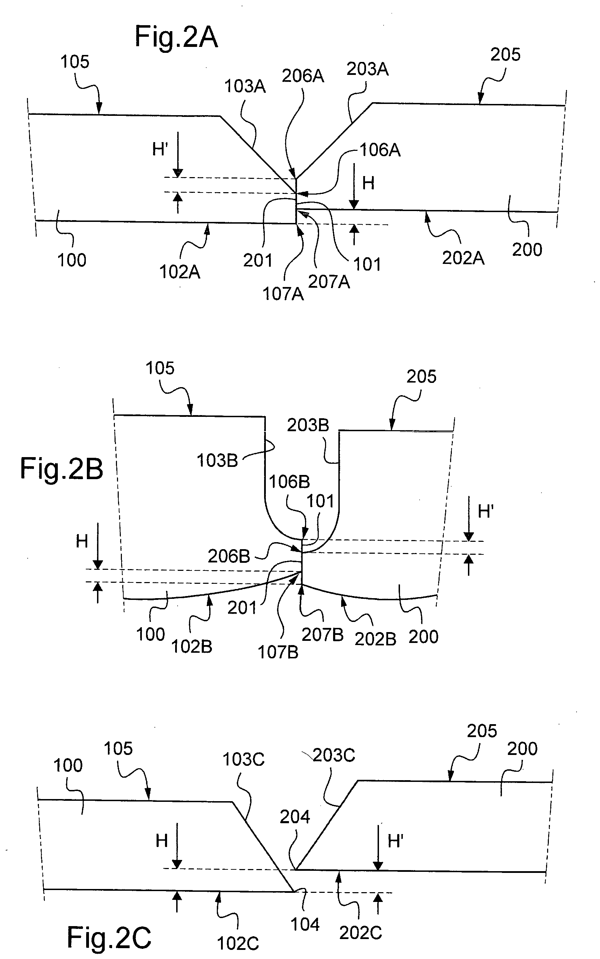

On fait référence à la figure 2A.

On y voit des portions d'extrémités respectives de tubes chanfreinés 100, 200 comprenant des talons respectifs 101, 201, chacun sous la forme d'une surface plane généralement annulaire, disposée sensiblement perpendiculairement à l'axe de son tube respectif. Les talons 101 et 201 forment des surfaces d'extrémités respectives des tubes 100 et 200.

Les portions d'extrémités des tubes 100, 200 comprennent des chanfreins 103A, 203A respectifs, chacun sous la forme d'une surface généralement tronconique se rattachant d'une part à la surface extérieure 105, 205 de son tube respectif, et, d'autre part, au talon 101, 201 de ce tube en une arête dite "extérieure" 106A, 206A. Chaque talon 101, 201 se raccorde à la surface intérieure de son tube respectif en une arête dite "intérieure" 107A, 207A. Ici, les chanfreins 103A, 203A sont inclinés à environ 45° par rapport à la surface intérieure de leurs tubes respectifs.

On fait référence à la figure 2B.

Les chanfreins 103B, 203B présentent un profil radial en forme J. Dit autrement, chaque chanfrein présente une première surface généralement plane qui s'étend sensiblement perpendiculairement à la surface extérieure 105, 205 de son tube respectif, et une seconde surface, courbe, qui raccorde la première surface au talon 101, 201 du tube, à chaque fois tangentiellement.

La surface interne 102B, 202B respective des tubes 100, 200 est légèrement inclinée par rapport à l'axe longitudinal du tube. Cette inclinaison est de l'ordre de quelques degrés. Elle est typiquement comprise entre 1° et 20°. Cette inclinaison de la surface interne 102B, 202B résulte d'un usinage, pour lequel une portion d'extrémité de la surface intérieure du tube sert de référence.

On fait référence à la figure 2C.

Ici, les portions d'extrémités des tubes 100, 200 présentent des chanfreins 103C, 203C respectifs sous la forme chacun d'une surface tronconique qui se raccorde directement à la surface intérieure 102C, 202C du tube en une arête unique 104, 204. Les portions d'extrémités des tubes 100, 200 sont dépourvues de talon. Dit autrement, ce sont ici des lignes, les arêtes uniques 104 et 204, qui forment les extrémités en vis-à-vis des tubes 100, 200.

Les tubes bruts présentent généralement des chanfreins inclinés d'environ 30° à la surface d'extrémité du tube. Ces chanfreins peuvent être ré-usinés ou non.

On vient de présenter des formes de portions d'extrémités de tubes courantes, à titre d'exemple uniquement. La mise en oeuvre de l'invention s'applique à des chanfreins, et plus généralement des portions d'extrémités, de profils de formes différentes.

On cherche à ajuster la position mutuelle des tubes 100, 200 en venant en prise sur leur surface extérieure 105, 205, au voisinage de leurs extrémités et à les déplacer et/ou les déformer de manière à obtenir une coïncidence optimale des surfaces d'extrémité en vue de les souder.

Aucune dimension précise des tubes n'est connue avant le positionnement selon l'invention. Les tubes à traiter présentent des géométries et dimensions proches l'un de l'autre, qui correspondent, au moins pour certaines d'entre elles, à des dimensions nominales similaires c'est-à-dire aux tolérances de fabrication près.

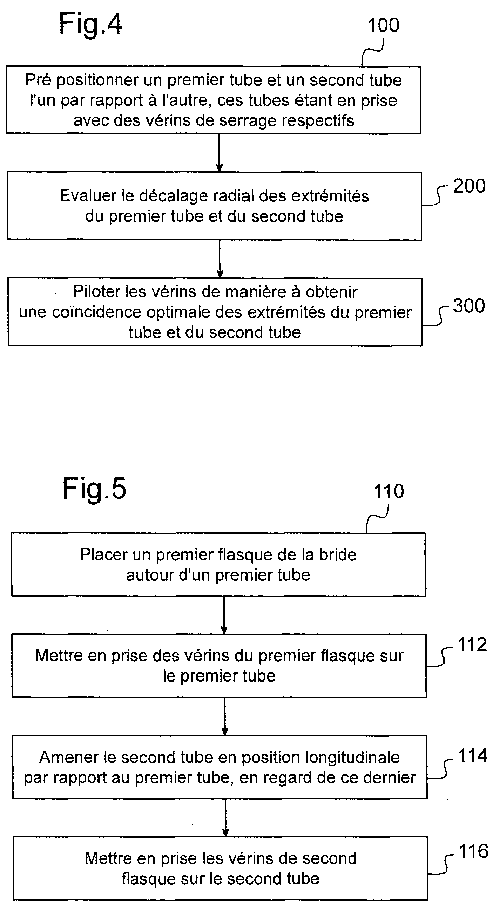

On fait référence à la figure 4.

On commence par une étape 100 de pré positionnement mutuel des tubes. Ce pré positionnement est basé sur ce que l'on pourrait appeler un alignement grossier des surfaces extérieures des tubes 100, 200 au voisinage de leurs extrémités respectives. On fait référence à la figure 5 qui montre une première variante du pré positionnement mutuel des tubes.

Dans une étape 110, on place une bride équipé de vérins sur une portion d'extrémité de l'un des tubes. La bride est par exemple analogue à la bride 40 de la figure 1. La bride peut être positionnée en amenant des éléments palpeurs rétractables (non représentés) fixés à la bride en appui sur la surface extérieure de ce premier tube.

Dans une étape 112, on actionne les vérins de cette bride afin de serrer le premier tube, c'est-à-dire de venir en prise avec la surface extérieure de celui-ci. Le premier tube se trouve dans sa position de soudage. Dans cette étape de pré positionnement de la bride sur le premier tube, les premiers vérins 1 sont approchés de la surface extérieure du premier tube 100 puis serrés contre celle-ci, concentriquement au châssis. On fait avancer les tiges des vérins de manière concentrique à la même vitesse pendant la même durée tout en mesurant leur déplacement.

Les vitesses et distances de déplacement sont paramétrables.

Dans une phase d'approche, la vitesse d'avance des vérins peut atteindre 6 mm/s.

À proximité de la surface externe du premier tube 100, la vitesse peut être réduite, par exemple à 0,3 mm/s afin de contrôler avec plus de précisions le déplacement des vérins. On synchronise précisément les déplacements de chacun des vérins 1 répartis autour de l'extrémité du premier tube 100.

Une fois ce serrage achevé, il est encore possible de commander indépendamment chacun des vérins, en force d'appui et en course. Ceci permet d'optimiser le serrage et le positionnement final de la ou des extrémités des tubes, ainsi que le profil de la section d'extrémité.

Lorsque les vérins 1 serrent suffisamment le premier tube par l'extérieur, c'est-à-dire lorsqu'on atteint une valeur de pression de serrage prédéterminée, par exemple de 1,5 tonne par vérins, on cesse l'avance des vérins.

Dans une étape 114, on amène le second des tubes à l'intérieur de la bride, au niveau du second flasque de manière que son extrémité se trouve en vis-à-vis de l'extrémité du premier tube. On positionne le second tube au mieux en se repérant sur les surfaces extérieures des extrémités des deux tubes et en amenant au contact l'un de l'autre les talons respectifs des faces d'extrémités du premier et du second tube.

Dans une étape 116, on actionne les vérins de la seconde bride qui viennent en prise sur la paroi extérieure du second tube.

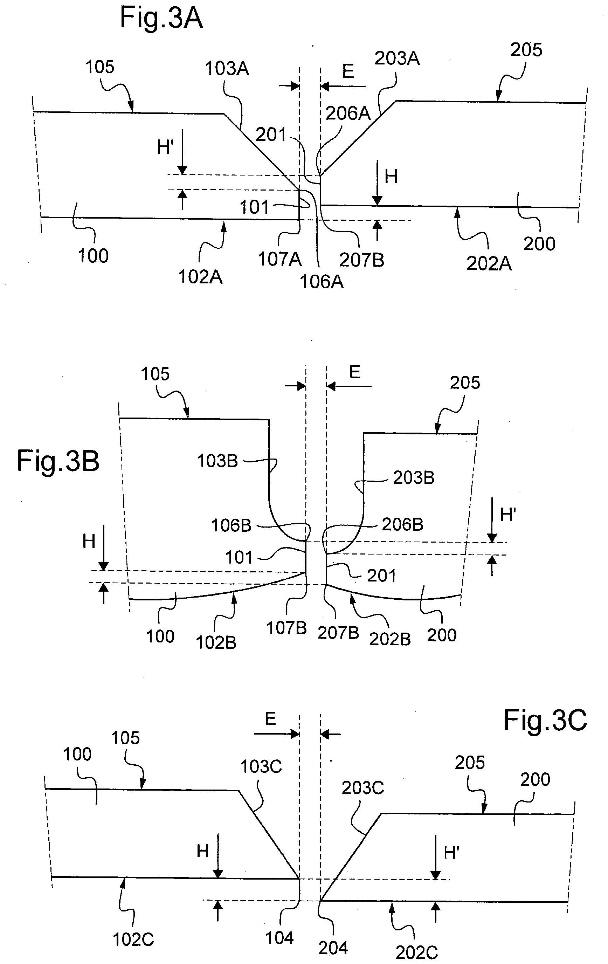

On amène l'extrémité du second tube 200 en contact avec celle du premier tube 100. En variante, on peut disposer les extrémités des tubes de manière qu'il existe entre elles un écartement longitudinal E déterminé, comme illustré sur les figures 3A, 3B et 3C. L'écartement E dépend du procédé de soudage mis en oeuvre. Par exemple en cas de soudage manuel la valeur de E pourra être fixée entre 1 et 4 mm, typiquement voisin de 2 mm.

En cas de soudage automatique, au moyen de torches MIG, MAG ou TIG par exemple, on peut envisager une valeur de E comprise entre 0 et 0,5 mm.

On amène les vérins du second jeu 2 en serrage avec l'extérieur du second tube 200, de manière analogue à ce qui a été fait pour les vérins du premier jeu de vérins 1.

Les vitesses et distances de déplacement des vérins, c'est-à-dire de leur tige par rapport au corps, sont paramétrables.

Dans une phase d'approche, la vitesse d'avance des vérins peut par exemple atteindre 6 mm/s.

À proximité de la surface externe du premier tube 100, la vitesse peut être réduite, par exemple à 0,3 mm/s afin de contrôler avec plus de précisions le déplacement des vérins. On synchronise précisément les déplacements de chacun des vérins 1 répartis autour de l'extrémité du premier tube 100.

Une fois ce serrage achevé, il est encore possible de commander indépendamment chacun des vérins, en force d'appui et en course. Ceci permet d'optimiser le serrage et le positionnement final de la ou des extrémités des tubes, ainsi que le profil de la section d'extrémité.

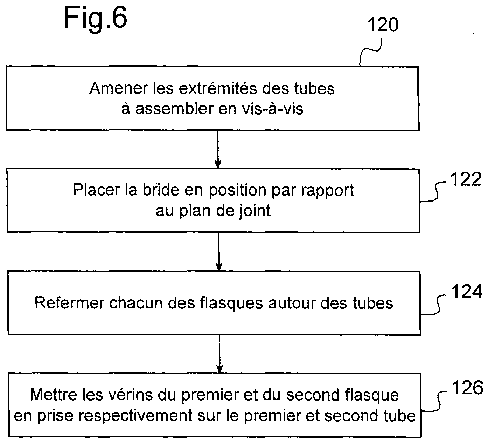

On fait référence à la figure 6, qui montre une seconde variante du pré positionnement mutuel des tubes.

Dans une étape 120, on amène les extrémités des deux tubes à assembler en vis-à-vis, généralement en contact mutuel, au moyen d'équipements indépendants de la bride 40. En variante, les faces d'extrémités des tubes sont écartées l'une de l'autre d'une distance E comme décrit plus haut.

La bride 40 est en position ouverte des flasques.

Dans une étape 122, on place la bride en position par rapport au plan de joint.

Dans une étape 124, on referme chacune des flasques autour des tubes.

Dans une étape 126, on vient en prise sur la surface extérieure du premier tube, de manière analogue à ce qui a été décrit plus haut. Et on vient en prise sur la surface extérieure du second tube, de manière analogue à ce qui a été décrit plus haut. Optionnellement, on ajuste la position longitudinale de la bride au moyen de palpeurs comme décrit précédemment, avant d'effectuer la mise en prise avec les premier et second tubes 100, 200.

On fait de nouveau référence à la figure 4.

À la fin de l'étape 100, les faces d'extrémité des tubes 100, 200 se trouvent dans une position d'alignement grossière déterminée par le positionnement relatif des surfaces extérieures des tubes 100 et 200 au voisinage de leurs extrémités respectives.

Au cours d'une étape 200, on évalue le décalage radial des surfaces d'extrémités 101, 201 des tubes 100, 200.

Le défaut d'alignement entre les surfaces d'extrémité respectives 101, 201 du premier tube 100 et du second tube 200 peut être évalué sous la forme d'une valeur au moins de décalage radial H' entre les arêtes d'extrémités extérieures 106, 206, c'est-à-dire par l'extérieur des tubes.

En variante, le défaut d'alignement entre les surfaces d'extrémité respectives 101, 201 du premier tube 100 et du second tube 200 pourrait être évalué sous la forme d'une valeur au moins de décalage radial H entre les arêtes d'extrémités intérieures 107, 207, c'est-à-dire par l'intérieur des tubes.

Les grandeurs H et H' correspondent à ce que l'on appelle le "Hilo" dans la technique. De préférence, on évalue plusieurs valeurs de décalage H ou de H', prises en plusieurs points de la circonférence de l'arête interne 107, 207 ou externe 106, 206 des tubes 100, 200.

De préférence, on prend comme référence l'arête extérieure aux points de mesure accessibles par l'extérieur car du fait de l'usinage par prise par la surface intérieur et galet copieur qui la suit, le décalage H est égal au décalage H'.

Le décalage radial H' peut être facilement mesuré, depuis l'extérieur du tube. Cette mesure peut être réalisée par un opérateur, par exemple muni d'un pied à coulisse, et/ou un ou plusieurs capteurs.

Le décalage radial H' peut être surveillé visuellement. Un opérateur peut alors commander manuellement les vérins 1, 2 pour déplacer l'un et/ou l'autre des tubes 100, 200. Le déplacement peut être impulsionnel ou continu.

L'évaluation du décalage radial H' ou H peut faire appel à un ou plusieurs capteurs du type profilomètre laser montés sur un chariot de soudage, à caméra profilométrique, à des procédés de traitement d'image ou encore des palpeurs.

On fait encore une fois référence à la figure 4. Dans une étape 300, on pilote les vérins de la bride de manière à déplacer mutuellement les tubes et/ou les déformer de manière à optimiser la coïncidence des surfaces d'extrémité 101, 201.

Au moyen des vérins pilotés, on déplace la surface d'extrémité du deuxième tube 200 dans un plan parallèle au plan de joint par rapport au premier tube 100 qui reste fixe par rapport à la bride 40. Il est également envisageable de déplacer à la fois le premier tube 100 et le second tube 200 par rapport à la bride 40.

Les déplacements relatifs des vérins peuvent être réalisés de préférence par des impulsions commandées et contrôlées par un opérateur, transformées en trajectoire par un calculateur. Ces déplacements peuvent être également pilotés par un calculateur tel qu'un automate programmable, à partir de mesures réalisées lors de la phase de mise en vis-à-vis des 2 tubes, ces mesures étant effectuées par exemple au moyen de palpeurs additionnels montés sur l'équipement.

Les impulsions peuvent permettre des déplacements, en mode manuel, de 0,1 mm à 1 mm.

En diminuant les décalages H ou H', on s'assure que les surfaces d'extrémités 101, 201 coïncident au maximum, c'est-à-dire de l'existence d'un maximum de surface en contact ou en vis-à-vis.

Cette optimisation de la coïncidence des surfaces peut être obtenue en mode manuel par appréciation qualitative visuelle de l'opérateur ou, en mode automatique, via le calculateur. Si nécessaire une ou plusieurs mesures peuvent être reprises après serrage et premiers déplacements pilotés des vérins.

On cherche une position finale des vérins qui correspond à une optimisation des zones de coïncidence entre les surfaces d'extrémité ou les arêtes extrêmes des tubes. Cette optimisation correspond à une minimisation de la somme des valeurs de H, H' évaluées précédemment, tout en assurant une surface de coïncidence minimale sur le pourtour des tubes, c'est-à-dire des valeurs de décalage radiale H ou H' inférieures à une valeur de Hilo maximale autorisée, par exemple de l'ordre d'un millimètre. Une valeur optimale de HILO est typiquement voisine de 0,5 mm, tandis que des valeurs autour de 1,5mm sont acceptables. En variante, on pourrait chercher à uniformiser le décalage radial sur la circonférence des tubes.

En pratique, on peut opérer en deux temps. On commande d'abord un déplacement des vérins destiné à faire bouger les tubes l'un par rapport à l'autre, sans déformation. Ensuite, on peut déformer ponctuellement l'un et/ou l'autre des tubes de manière à réduire encore la somme des décalages radiaux ou pour rattraper un écart radial plus important que les autres.

Lorsque les surfaces d'extrémités sont en position mutuelle optimale, on fige les vérins.

Dans le cas de chanfreins dépourvus de talons, on diminue le plus possible les décalages radiaux H et H' entre les lignes ou arêtes d'extrémités 104, 204.

Après avoir figé la position des vérins, on peut reprendre un jeu de mesures de décalage radial H et/ou H'. Dans le cas où la coïncidence entre les surfaces annulaires ne serait pas estimée suffisante, par l'opérateur ou par le calculateur, des déplacements itératifs de l'un au moins des tubes 100, 200 dans le plan de joint peuvent se poursuivre.

On fait référence aux figures 3A, 3B et 3C.

On voit les extrémités des premier et second tubes 100, 200 dans des configurations analogues respectivement aux figures 2A, 2B et 2C à l'exception que les surfaces d'extrémité 101 et 201, et les arêtes d'extrémité 104 et 204, sont mutuellement écartées d'une distance E mesurée dans l'axe longitudinal des tubes 100, 200. Cette position correspond à la position axiale finale avant soudage.

Le procédé de mise en position qui vient d'être décrit est également applicable dans le cas illustré sur les figures 3A, 3B et 3C, où l'on maintient volontairement un écartement longitudinal E entre les surfaces d'extrémités 101, 201 des tubes 100, 200.

Au cours du déplacement mutuel des tubes 100, 200, certains vérins peuvent avoir un mouvement de recul, ou de rétractation, tout en assurant un effort d'appui constant sur l'extrémité considérée.

Le positionnement mutuel des tubes 100, 200 implique de déplacer ces tubes l'un par rapport à l'autre tout en maintenant un effort de serrage, ou de prise, entre la bride et le tube déplacé. Ceci nécessite de pouvoir déplacer conjointement chaque vérin et un ou plusieurs des vérins qui lui sont opposés (vérins antagonistes) sans perdre de l'effort de serrage. Pour déplacer un tube selon une direction qui correspond à un vérin, on commande en pression le vérin en question, tandis que son ou ses vérins antagonistes sont commandés à l'échappement à un niveau d'effort juste inférieur à l'effort de poussée du premier vérin, à leur composante respective de cet effort de poussée. La différence de pression provoque un déplacement du tube qui cesse lorsqu'on équilibre les pressions d'échappement et de commande des vérins en question. Sur ce principe on peut combiner le déplacement de différents vérins selon la direction de déplacement souhaitée pour les tubes.

Pour déformer un tube, il s'agit de déplacer l'un des vérins indépendamment des autres. On peut également combiner les vérins de manière à créer des déformations complexes du tube.

Les électrovannes peuvent être pilotées conjointement grâce à un calculateur qui exécute un programme spécifique, typiquement capable de mettre en oeuvre les étapes décrites en relation avec les figures 4 à 6.

Les capteurs de position/déplacement des vérins permettent de suivre la position de chaque tube en temps réel, par calculs géométriques.

Le pilotage individuel des vérins 1, 2, grâce à un calculateur, par l'effort de poussée et/ou la course de chaque vérin au niveau de la surface externe du tube, permet de générer des mouvements de l'un des tubes par rapport à l'autre autre tube. La vitesse, la direction et l'amplitude de ces mouvements sont ainsi parfaitement maîtrisées. Les efforts d'appui sont maintenus pendant le déplacement des extrémités du tube. Lorsqu'une position souhaitée est atteinte, le système bloque la course des vérins.

À tout moment, il est possible de corriger individuellement, c'est-à-dire séparément sur chaque vérin, la pression d'appui ou le déplacement de façon à optimiser le serrage global autour du ou des tubes.

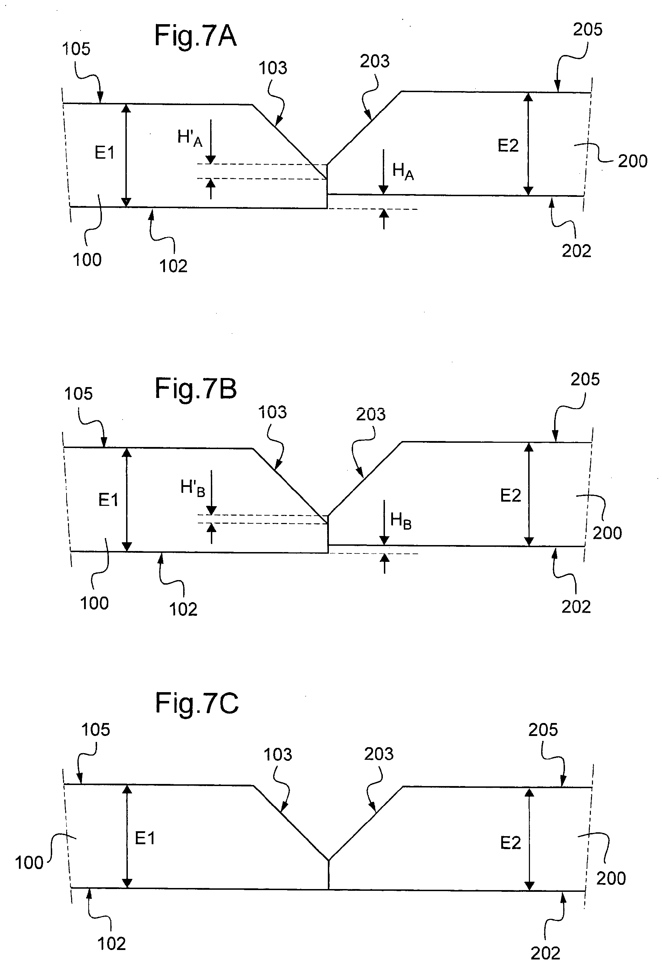

On fait référence aux figures 7A à 7C.

Ces figures montrent un premier tube 100 présentant, au voisinage de son extrémité, radialement, une épaisseur El qui est sensiblement supérieure à l'épaisseur E2 d'un second tube 200 au voisinage de son extrémité proximale, dans la même position radiale. Cette différence d'épaisseur peut résulter des défauts de concentricité de la surface intérieure 102, 202 des tubes par rapport à la surface extérieure 105, 205 et/ou à une variation dans les tolérances d'épaisseur entre le premier tube 100 et le second tube 200.

La figure 7A montre le premier tube 100 et le second tube 200 après qu'ils ont été alignés grossièrement par leur surface extérieure, tels que les tubes le sont par exemple après l'étape 100 décrite plus haut. Le décalage radial H'A est important et correspond à la différence d'épaisseur des tubes en cette position radiale.

La figure 7B montre le premier tube 100 et le second tube 200 après qu'ils ont été déplacés l'un par rapport à l'autre de manière à améliorer la coïncidence de leurs faces d'extrémités respectives. Le décalage radial H'B est nettement inférieur au décalage radial initial H'A. Typiquement, on a réussi à rattraper une grande partie des différences de coaxialité des surfaces intérieures par rapport aux surfaces extérieures des tubes 100,200. Pour autant, il demeure un décalage radial H'B qui peut, sous certaines conditions, être supérieur à une valeur de Hilo maximale autorisée. C'est par exemple le cas lorsque l'un des tubes 100, 200 présente une ovalisation nettement supérieure à l'autre tube, ou que les ovalisations des tubes sont décalées angulairement.

La figure 7C montre que les tubes 100, 200 après que le second tube a été déformé localement de manière à réduire le décalage radial résultant après une opération de déplacement mutuel des tubes visant à réduire globalement le décalage radial entre les extrémités des tubes 100, 200. Les surfaces intérieures des tubes 100, 200 sont maintenant sensiblement alignées l'une par rapport à l'autre, ou du moins le décalage radial final demeure dans une limite qui garantit que les opérations de soudage ultérieures se déroulent dans de bonnes conditions.

L'invention peut aussi concerner d'autres applications que l'assemblage par soudage dès lors qu'il s'agit d'aligner de façon précise et fiable des tubes, notamment de grandes dimensions et/ou de poids importants.

On vient de décrire un procédé de positionnement mutuel de tubes et une bride qui peut être utilisée pour aider à la mise en oeuvre de ce procédé. La bride qui a été décrite ici peut cependant être utilisée dans un cadre plus large, et notamment pour tout procédé d'alignement de tubes, y compris par mise en coïncidence des surfaces extérieures des tubes. La bride 40 peut être utilisée à chaque fois qu'il s'agit de déplacer l'un au moins des tubes sur lesquels elle est montée tout en maintenant sur ce tube un effort de serrage, ou de prise.

Le procédé décrit peut également être vu comme un procédé de positionnement d'un premier tube vis-à-vis d'un deuxième tube au niveau de leurs extrémités, l'extrémité du premier tube étant pourvue d'un premier chanfrein et d'une première surface sensiblement annulaire disposée à proximité de sa surface interne, l'extrémité du deuxième tube étant pourvue d'un deuxième chanfrein et d'une deuxième surface sensiblement annulai/e disposée à proximité de sa surface interne, lesdites première et deuxième surfaces annulaires définissant un plan de joint sensiblement perpendiculaire aux axes longitudinaux de chacun desdits tubes, procédé selon lequel on utilise et on pilote une pluralité de vérins de serrage radialement répartis autour du premier et du deuxième tube pour déplacer parallèlement audit plan de joint le deuxième tube Vis-à-vis du premier tube en fonction d'un décalage radial H, H' entre la première et la deuxième surface annulaire afin de garantir une surface maximale en vis-à-vis, surface dite de coïncidence, desdites surfaces annulaires.

Ledit décalage radial, ou Hilo, est évalué et surveillé soit visuellement soit à l'aide de capteurs spécifiques, et ledit décalage est transmis et traité par une unité centrale de calcul coopérant avec et permettant la commande du déplacement de tout ou partie desdits vérins.

L'évaluation et la surveillance du Hilo peuvent se faire in-situ et éventuellement en temps réel.

L'automatisation du procédé permet de traiter de très nombreux écarts géométriques de tubes, en des temps limités et de façon très précise.

Préférentiellement, le décalage radial est évalué et surveillé sur toute la circonférence soit au niveau des arêtes externes des surfaces annulaires définissant le fond des chanfreins, soit au niveau des arêtes des chanfreins sans talon. On peut choisir par exemple d'évaluer le décalage en plusieurs points de la circonférence, régulièrement répartis sur la circonférence. Cette évaluation du décalage peut être réalisée à l'aide d'un outillage spécifique.

Le décalage radial H peut être évalué et surveillé relativement aux parois internes des tubes. Le décalage radial H' peut également être évalué et surveillé relativement aux fonds des chanfreins respectifs des tubes. Les talons des chanfreins étant généralement de dimensions constantes sur toute la périphérie des tubes, un tel décalage est fiable et aisé à mettre en oeuvre.

Préalablement au déplacement du deuxième tube, on peut serrer la première extrémité du premier tube, aligner approximativement le deuxième tube vis-à-vis du premier tube, et serrer le deuxième tube dans cette position d'alignement. Avantageusement les serrages ont lieu au niveau des parois extérieures des tubes.

Lorsque les extrémités des tubes sont chanfreinées mais sans talon, on peut diminuer le décalage radial H, H' entre les lignes d'extrémité des tubes tout en le répartissant angulairement sur la circonférence des lignes d'extrémités.

L'alignement des tubes peut être réalisé dans un premier temps sur les surfaces extérieures du premier et du deuxième tube.

Un écartement longitudinal de quelques millimètres peut être prévu entre l'extrémité du premier et du deuxième tube. Cet écartement longitudinal est prédéfini et choisi par l'homme de métier en fonction du procédé de soudage mis en oeuvre, quand l'alignement selon l'invention est réalisé en vue d'un soudage des tubes. Le plan de joint est alors situé au milieu de l'écartement, parallèle aux surfaces annulaires en vis-à-vis, et perpendiculaire à l'axe longitudinal des tubes.

Une fois que les extrémités des tubes sont serrées, les vérins de serrage peuvent être pilotés individuellement de façon à permettre un déplacement relatif des extrémités des tubes tout en maintenant les efforts de serrage desdits vérins sur lesdits tubes. Avantageusement, on peut déplacer le premier et/ou le deuxième tube relativement l'un à l'autre jusqu'à l'obtention d'une surface de coïncidence comprise entre environ 20% et 100% de la surface annulaire du premier et/ou du deuxième tube.

En outre les vérins restent bloqués dans une position de serrage et maintiennent les efforts appliqués au premier et/ou au deuxième tube lorsque lesdits déplacements desdits tubes sont terminés. On peut également modifier localement le décalage radial H, H' en ajustant individuellement et séparément la position de l'un au moins des vérins. Par ailleurs, préalablement au serrage du premier tube, on peut positionner les vérins de telle sorte que des moyens de soudage soient centrés longitudinalement sur l'extrémité du premier tube ou bien sur le plan de joint défini entre le premier et le deuxième tube. Ceci constitue une position longitudinale de référence pour les tubes.

L'invention n'est pas limitée aux modes de réalisation décrits ci-dessus à titre d'exemple uniquement mais englobe toutes les variantes que pourra envisager l'homme de l'art. En particulier :
- Les vérins utilisés peuvent être de type électrique, ou de tout autre type voire même à actionnement manuel assisté par ordinateur.
- Les deux flasques de la bride 40 peuvent être montés l'un sur l'autre à coulissement. On peut alors en plus d'aligner mutuellement les tubes, les rapprocher l'un de l'autre, voire les maintenir serrer l'un contre l'autre.
- Les vérins ont été décrits comme étant régulièrement répartis angulairement sur leur flasque respectif, il pourrait cependant en être autrement.
- L'un au moins des flasques de la bride 40 pourrait être réalisé en une seule partie.

## Revendications

1. Procédé de positionnement mutuel de tubes, dans lequel on prévoit, sur un premier tube (100) et un second tube (200), une face d'extrémité respective comprenant une surface extrême (101, 201) généralement annulaire ou une arête extrême (104) généralement circulaire, proches d'une surface intérieure (102, 202) du tube (100), et une surface de chanfrein (103A, 203A, 103B, 203B, 103C, 203C) reliant la surface extrême ou l'arête extrême (104, 204) à une surface extérieure du tube (105, 205), et on déplace le premier et le second tube l'un par rapport à l'autre de manière à positionner les faces d'extrémités de ces tubes l'une par rapport à l'autre, **caractérisé en ce que** l'on prévoit en outre un dispositif comprenant une bride (40) comportant deux flasques homologues (10, 20) montés l'un sur l'autre, l'un des flasques supportant un premier jeu de vérins hydrauliques (1), tandis que l'autre flasque supporte un second jeu de vérins hydrauliques (2), les vérins de l'un au moins du premier jeu et du second jeu étant chacun associés d'une part à une électrovanne qui peut être commandée pour alimenter en fluide le vérin et, d'autre part, à un régulateur de pression de type proportionnel qui peut être piloté pour commander le vérin à l'échappement, et **en ce que** le procédé comprend les étapes suivantes :
a. mettre en prise le premier jeu de vérins hydrauliques et le second jeu de vérins hydrauliques (1, 2) respectivement sur le premier tube (100) et le second tube (200), chaque vérin étant disposé radialement à son tube respectif, les vérins étant répartis autour de leurs tubes respectifs (100, 200), le premier et le second tube étant pré positionnés l'un par rapport à l'autre de sorte que leur faces d'extrémité respectives soient en regard l'une de l'autre ;
b. évaluer au moins un décalage radial (H, H') entre les surfaces extrêmes ou les arêtes extrêmes respectives du premier et du second tube ;
c. piloter les vérins (1, 2) du premier jeu et/ou du second jeu pour déplacer le premier tube et/ou le second tube l'un par rapport à l'autre en fonction du ou des décalages radiaux (H, H') évalués sur la base d'une optimisation de zones de coïncidence entre les surfaces extrêmes ou les arêtes extrêmes respectives desdits tubes.

2. Procédé selon la revendication 1, dans lequel **caractérisé en ce que** ledit décalage radial H, H' est apprécié visuellement.

3. Procédé selon la revendication 1, dans lequel ledit décalage radial H, H' est évalué à l'aide de capteurs spécifiques, et des valeurs de décalage radial sont transmises à une unité centrale de calcul, cette unité centrale de calcul étant capable de traiter lesdites valeurs pour commander le déplacement de tout ou partie desdits vérins (1, 2).

4. Procédé selon l'une des revendications précédentes, dans lequel, à l'étape b., on évalue le décalage radial (H) sous la forme d'une ou plusieurs valeurs de décalage radial entre des arêtes respectives du premier et du second tube, chaque arête formant jonction entre la surface intérieure (102, 202) de son tube respectif (100, 200) et la surface d'extrémité de ce tube.

5. Procédé selon l'une quelconque des revendications précédentes, dans lequel, à l'étape b., on évalue le décalage radial (H') sous la forme d'une ou plusieurs valeurs de décalage radial entre des arêtes respectives du premier et du second tube, chaque arête formant jonction entre la surface de chanfrein (102, 202) de son tube respectif (100, 200) et la surface d'extrémité de ce tube.

6. Procédé selon l'une quelconque des revendications précédentes, dans lequel, à l'étape b., on évalue le décalage radial (H') sous la forme d'une ou plusieurs valeurs de décalage radial entre des arêtes respectives du premier et du second tube, chaque arête formant jonction entre la surface de chanfrein (102, 202) de son tube respectif (100, 200) et la surface intérieure de ce tube.

7. Procédé selon l'une des revendications précédentes, dans lequel l'étape a. comprend les opérations suivantes :
a1. mettre en prise le premier jeu de vérins hydrauliques sur la surface extérieure du premier tube ;
a2. déplacer le second tube par rapport au premier tube dans une position d'alignement où la face d'extrémité du second tube est approximativement alignée avec la face d'extrémité du premier tube ;
a3. mettre en prise le second jeu de vérins hydrauliques sur la surface extérieure du second tube dans cette position d'alignement.

8. Procédé selon l'une quelconque des revendications précédentes, dans lequel, à l'étape c., on pilote les vérins de manière à diminuer globalement le décalage radial entre les surfaces d'extrémité ou les arêtes d'extrémité tout cherchant à respecter une valeur de décalage radial maximale sur ces surfaces d'extrémité ou le long des arêtes d'extrémités.

9. Procédé selon l'une des revendications précédentes, dans lequel, à l'étape a., à l'état pré positionné, les faces d'extrémité du premier et du second tube (100, 200) sont mutuellement écartées de quelques millimètres selon la direction longitudinale de l'un et/ou l'autre des tubes.

10. Procédé selon l'une des revendications précédentes, dans lequel, à l'étape c., on pilote les vérins individuellement de façon à permettre un déplacement relatif des extrémités des tubes tout en maintenant des efforts de prise desdits vérins (1,2) sur lesdits tubes.

11. Procédé selon l'une des revendications précédentes, dans lequel on déplace ledit premier (100) et/ou le second tube (200) relativement l'un à l'autre jusqu'à l'obtention d'une surface de coïncidence comprise entre 20% et 100% de la surface d'extrémité (101, 201) du premier et/ou du second tube.

12. Procédé selon l'une des revendications précédentes, dans lequel les vérins restent bloqués dans une position de prise et maintiennent les efforts appliqués au premier et/ou au second tube lorsque la position de coïncidence optimale est obtenue.

13. Procédé selon l'une des revendications précédentes, dans lequel l'étape c. comprend au moins une sous-étape dans laquelle on pilote le déplacement de l'un au moins des vérins indépendamment du déplacement des autres vérins de manière à modifier localement le décalage radial (H, H') entre les surfaces d'extrémité ou les arêtes d'extrémité.

14. Procédé selon l'une des revendications précédentes, dans lequel l'étape c. comprend les sous-étapes suivantes :
c1. piloter conjointement les vérins pour déplacer le premier tube et le second tube l'un par rapport à l'autre en réduisant globalement le décalage radial entre les surfaces d'extrémités ou les arêtes d'extrémité de ces tubes,
c2. piloter individuellement au moins l'un des vérins de manière différentielle par rapport à un ou plusieurs vérins antagonistes pour déformer localement son tube respectif.

15. Dispositif pour le positionnement mutuel de tubes, du type comprenant une bride (40) comportant deux flasques homologues (10, 20) montés l'un sur l'autre, l'un des flasques supportant un premier jeu de vérins hydrauliques (1), tandis que l'autre flasque supporte un second jeu de vérins hydrauliques (2), **caractérisé en ce que** les vérins de l'un au moins du premier jeu de vérins et du second jeu de vérins sont chacun associés d'une part à une électrovanne qui peut être commandée pour alimenter en fluide le vérin et, d'autre part, à un régulateur de pression de type proportionnel qui peut être piloté pour commander le vérin à l'échappement.

16. Dispositif selon la revendication 15 comprenant en outre une centrale hydraulique comportant une pluralité d'unités de pompe hydraulique, chaque vérin de l'un au moins du premier et du second jeu de vérins étant relié à un élément de pompe respectif.

## Patentansprüche

1. Verfahren zum gegenseitigen Positionieren von Rohren, bei dem auf einem ersten Rohr (100) und einem zweiten Rohr (200), wobei eine jeweilige Stirnfläche eine in der Regel ringförmige Stirnfläche (101, 201) oder eine in der Regel kreisförmige Endkante (104) nahe einer Innenfläche (102,202) des Rohrs (100) und einer Fasenfläche (103A, 203A, 103B, 203B, 103C, 203C) umfasst, welche die Stirnfläche oder Endkante (104, 204) mit einer Außenfläche des Rohrs (105, 205) verbindet, und das erste und das zweite Rohr werden zueinander so positioniert, dass die Stirnfläche dieser Rohre gegenüberstehen, **dadurch gekennzeichnet, dass** man zudem eine Vorrichtung einplant, die einen Flansch (40) mit zwei gleichförmigen Flanschen (10, 20) umfasst, die aufeinander montiert sind, wobei einer der Flansche einen ersten Satz von Hydraulikzylindern (1) trägt, während der andere Flansch einen zweiten Satz von Hydraulikzylindern (2) trägt, und die Zylinder entweder des ersten oder des zweiten Satzes mit einem Magnetventil verbunden sind, welches gesteuert werden kann, um den Zylinder mit Flüssigkeit zu versorgen, und andererseits mit einem Proportionaldruckregler, der gesteuert werden kann, um den Zylinder am Auslass zu steuern, wobei das Verfahren aus den folgenden Schritten besteht:
a. Eingreifen des ersten Satzes von Hydraulikzylindern und des zweiten Satzes von Hydraulikzylindern (1, 2) jeweils auf dem ersten Rohr (100) bzw. dem zweiten Rohr (200), wobei jeder Zylinder radial zu seinem jeweiligen Rohr angeordnet ist und die Zylinder um ihre jeweiligen Rohre (100, 200) angeordnet sind, wobei das erste und das zweite Rohr vorab so relativ zueinander positioniert sind, dass ihre jeweiligen Stirnflächen einander zugewandt sind;
b. Auswerten mindestens eines radialen Versatzes (H, H') zwischen den jeweiligen Stirnflächen oder Endkanten des ersten und zweiten Rohrs;
c. Steuern der Zylinder (1, 2) des ersten Satzes und/oder des zweiten Satzes, um das erste und/oder das zweite Rohr relativ zueinander in Abhängigkeit von dem (oder den) radialen Versatz (Versätzen) (H, H') zu bewegen, der auf der Grundlage einer Optimierung der Koinzidenzflächen zwischen den jeweiligen Stirnflächen oder Endkanten der Rohre ausgewertet wird.

2. Verfahren nach Anspruch 1, **dadurch gekennzeichnet, dass** dieser radiale Versatz H, H' visuell ausgewertet wird.

3. Verfahren nach Anspruch 1, bei dem der radiale Versatz H, H' mittels spezifischer Sensoren ausgewertet wird und die radialen Versatzwerte an eine zentrale Recheneinheit übertragen werden, wobei die zentrale Recheneinheit diese Werte verarbeiten kann, um die Verschiebung aller oder eines Teils der Zylinder (1, 2) zu steuern.

4. Verfahren nach einem der vorstehenden Ansprüche, bei dem in Schritt b. der radiale Versatz (H) in Form eines oder mehrerer radialer Versatzwerte zwischen den jeweiligen Kanten des ersten und zweiten Rohres ausgewertet wird, wobei jede Kante eine Verbindung zwischen der Innenfläche (102, 202) ihres jeweiligen Rohres (100, 200) und der Stirnfläche dieses Rohrs bildet.

5. Verfahren nach einem der vorstehenden Ansprüche, bei dem in Schritt b. der radiale Versatz (H') in Form eines oder mehrerer radialer Versatzwerte zwischen den jeweiligen Kanten des ersten und zweiten Rohres ausgewertet wird, wobei jede Kante eine Verbindung zwischen der Fasenfläche (102, 202) ihres jeweiligen Rohrs (100, 200) und der Stirnfläche dieses Rohrs bildet.

6. Verfahren nach einem der vorstehenden Ansprüche, bei dem in Schritt b. der radiale Versatz (H') in Form eines oder mehrerer radialer Versatzwerte zwischen den jeweiligen Kanten des ersten und zweiten Rohrs ausgewertet wird, wobei jede Kante eine Verbindung zwischen der Fasenfläche (102, 202) ihres jeweiligen Rohrs (100, 200) und der Innenfläche dieses Rohrs bildet.

7. Verfahren nach einem der vorstehenden Ansprüche, bei dem Schritt a. die folgenden Abläufe umfasst:
a1. Einrasten des ersten Satzes von Hydraulikzylindern an der Außenfläche des ersten Rohres;
a2 Verschieben des zweiten Rohrs relativ zum ersten Rohr in eine Ausrichtposition, in welcher die Stirnfläche des zweiten Rohres ungefähr an der Stirnfläche des ersten Rohres ausgerichtet ist;
a3 Einrasten des zweiten Satzes Hydraulikzylinder an der Außenfläche des zweiten Rohres in dieser Ausrichtposition.

8. Verfahren nach einem der vorstehenden Ansprüche, bei dem in Schritt c. die Zylinder so gesteuert werden, dass der radiale Versatz zwischen den Stirnflächen oder den Endkanten insgesamt verringert wird und gleichzeitig ein maximaler radialer Versatzwert an diesen Stirnflächen oder entlang der Endkanten beibehalten wird.

9. Verfahren nach
einem der vorstehenden Ansprüche, bei dem in Schritt a. im vorab positionierten Status die Stirnflächen des ersten und zweiten Rohres (100, 200) in Längsrichtung des einen und/oder des anderen Rohrs einige Millimeter auseinanderliegen.

10. Verfahren nach einem der vorstehenden Ansprüche, bei dem in Schritt c. die Zylinder einzeln so gesteuert werden, dass eine relative Verschiebung der Rohrenden unter Aufrechterhaltung der Greifkräfte dieser Zylinder (1, 2) auf diese Rohre möglich ist.

11. Verfahren nach einem der vorstehenden Ansprüche, bei dem das erste (100) und/oder das zweite Rohr (200) relativ zueinander bewegt werden, bis eine Koinzidenzfläche zwischen 20% und 100 % der Stirnfläche (101, 201) des ersten und/oder des zweiten Rohres erreicht wird.

12. Verfahren nach einem der vorstehenden Ansprüche, bei dem die Zylinder in einer Greifposition verriegelt bleiben und die auf das erste und/oder das zweite Rohr ausgeübten Kräfte bei Erreichen der optimalen Koinzidenzposition aufrechterhalten bleiben.

13. Verfahren nach einem der vorstehenden Ansprüche, bei dem Schritt c. mindestens einen Teilschritt umfasst, bei dem die Bewegung mindestens eines der Zylinder unabhängig von der Bewegung der anderen Zylinder so gesteuert wird, dass der radiale Versatz (H, H') zwischen Stirnflächen oder Endkanten lokal verändert wird.

14. Verfahren gemäß einem der vorhergehenden Ansprüche, bei dem Schritt c. die folgenden Unterschritte umfasst:
c1. gemeinsame Steuerung der Zylinder, um das erste Rohr und das zweite Rohr relativ zueinander zu bewegen und den gesamten radialen Versatz zwischen den Stirnflächen oder Endkanten dieser Rohre zu verringern,
c2. einzelne differenzierte Steuerung mindestens eines der Zylinder gegenüber einem oder mehreren gegenüberliegenden Zylindern, um das jeweilige Rohr lokal zu verformen.

15. Vorrichtung zur gegenseitigen Positionierung von Rohren, die einen Flansch (40) mit zwei gleichförmigen Flanschen (10, 20) aufweisen, die übereinander angeordnet sind, und einer der Flansche einen ersten Satz von Hydraulikzylindern (1) trägt, während der andere Flansch einen zweiten Satz von Hydraulikzylindern (2) trägt, **dadurch gekennzeichnet, dass**
die Zylinder von mindestens einem
des ersten Satzes Zylinder und des zweiten Satzes Zylinder
jeweils einerseits mit einem
Magnetventil verbunden sind, das so gesteuert werden, dass es dem Zylinder Flüssigkeit zuführt, und andererseits mit einem Proportionaldruckregler verbunden sind, der so gesteuert werden kann, dass er den Zylinder am Auslass steuert.

16. Vorrichtung nach Anspruch 15, die ferner ein Hydraulikaggregat mit einer Vielzahl von hydraulischen Pumpeneinheiten umfasst, wobei jeder Zylinder mindestens eines des ersten und zweiten Satzes von Zylindern mit einem entsprechenden Pumpenelement verbunden ist.

## Claims

1. A method for mutual positioning of tubes, providing, on a first tube (100) and a second tube (200), a respective end face comprising an end surface (101, 201) generally annular in shape or an end peak (104) generally circular in shape, close to an inner surface (102, 202) of the tube (100), and a chamfer surface (103A, 203A, 103B, 203B, 103C, 203C) connecting the outer surface or the outer peak (104, 204) to an outer surface of the tube (105,205), and the first and second tube are moved relative to one another in such a way as to position the end faces of those tubes with respect to one another, **characterized in that** there is further provided a device comprising a flange (40) comprising two counterpart endshields (10,20) mounted on one another, one of the endshields supporting a first set of hydraulic cylinders (1), while the other endshield supports a second set of hydraulic cylinders (2), the cylinders of at least the first set and second set each being associated with, firstly, a solenoid valve that may be controlled to supply the cylinder with fluid, and secondly, a proportional pressure regulator that may be controlled to operate the cylinder at the exhaust, and **in that** the method comprises the following steps:
a. engaging the first set of hydraulic cylinders and the second set of hydraulic cylinders (1, 2) respectively on the first tube (100) and the second tube (200), each cylinder being radially disposed on its respective tube, the cylinders being distributed around their respective tubes (100, 200), the first and second tube being pre-positioned with respect to one another so that their respective end faces are facing one another;
b. evaluating at least one radial shift (H, H') between the respective end surfaces or end peaks of the first and second tube;
c. controlling the cylinders (1, 2) of the first set and/or the second set to move the first tube and/or the second tube with respect to one another based on one or more radial shifts (H, H') evaluated on the basis of optimization of matching areas between the respective end surfaces or end peaks of said tubes.

2. A method according to claim 1, **characterized in that** said radial shift H, H' is visually assessed.

3. A method according to claim 1, wherein said radial shift H, H' is evaluated using specific sensors, and radial shift values are transmitted to a central processing unit, that central processing unit being capable of processing said values to control the movement of all or some of said cylinders (1, 2).

4. A method according to one of the preceding claims, wherein, in step b., the radial shift (H) is evaluated in the form of one or more radial shift values between respective peaks of the first and second tube, each peak forming a junction between the inner surface (102, 202) of its respective tube (100, 200) and the end surface of that tube.

5. A method according to any one of the preceding claims, wherein, in step b., the radial shift (H') is evaluated in the form of one or more radial shift values between respective peaks of the first and second tube, each peak forming a junction between the chamfer surface (102, 202) of its respective tube (100, 200) and the end surface of that tube.

6. A method according to any one of the preceding claims, wherein, in step b., the radial shift (H') is evaluated in the form of one or more radial shift values between respective peaks of the first and second tube, each peak forming a junction between the chamfer surface (102, 202) of its respective tube (100, 200) and the inner surface of that tube.

7. A method according to any one of the preceding claims, wherein step a. comprises the following operations:
a1. engaging the first set of hydraulic cylinders on the outer surface of the first tube;
a2 moving the second tube with respect to the first tube into an alignment position where the end face of the second tube is approximately aligned with the end face of the first tube;
a3 engaging the second set of hydraulic cylinders on the outer surface of the second tube in that alignment position.

8. A method according to any one of the preceding claims, wherein, in step c., the cylinders are controlled so as to generally reduce the radial shift between the end surfaces or end peaks whilst seeking to comply with a maximum radial shift value on those end surfaces or along the end peaks.

9. A method
according to one of the preceding claims, wherein, in step a., in the pre-positioned state, the end faces of the first and second tube (100, 200) are separated from one another by a few millimeters in the longitudinal direction of one and/or the other of the tubes.

10. A method according to one of the preceding claims, wherein, in step c., the cylinders are individually controlled so as to enable a relative movement of the ends of the tubes while maintaining engagement efforts of said cylinders (1, 2) on said tubes.

11. A method according to one of the preceding claims, wherein said first (100) and/or second tube (200) are moved relative to one another until a matching surface of between 20% and 100% of the end surface (101, 201) of the first and/or second tube is obtained.

12. A method according to one of the preceding claims, wherein the cylinders remain stuck in an engagement position and maintain the force applied to the first and/or second tube when the optimal matching position is obtained.

13. A method according to one of the preceding claims, wherein step c. comprises at least one substep in which the movement of at least one of the cylinders is controlled independently of the movement of the other cylinders, so as to locally modify the radial shift (H, H') between the end surfaces or end peaks.

14. A method according to any one of the preceding claims, wherein step c. comprises the following substeps:
c1. jointly controlling the cylinders to move the first tube and second tube relative to one another while generally reducing the radial shift between the end surfaces or end peaks of those tubes,
c2. individually controlling at least one of the cylinders in a differential manner with respect to one or more opposing cylinders to locally deform its respective tube.

15. A device for manually positioning tubes, of the type comprising a flange (40) comprising two counterpart endshields (10, 20) mounted on one another, one of the endshields supporting a first set of hydraulic cylinders (1), while the other endshield supports a second set of hydraulic cylinders (2), **characterized in that** the
cylinders of at least one of
the first set of cylinders and second set of cylinders are
each associated firstly with a
solenoid valve that may be controlled to supply the cylinder with fluid, and secondly, a proportional pressure regulator that may be controlled to operate the cylinder at the exhaust.

16. A device according to claim 15, further comprising a hydraulic power plant comprising a plurality of hydraulic pump units, each cylinder of at least the first and second set of cylinders being linked to a respective pump element.
